# EUROPEAN PATENT APPLICATION

(11) **EP 2 169 540 A1**
(43) Date of publication of application: **31.03.2010**
(21) Application number: 07767292.1
(22) Date of filing: 20.06.2007
(51) Int. Cl.: G06F 9/38

(54) **PROCESSING DEVICE**

(71) Applicant: Fujitsu Limited, Kawasaki-shi, Kanagawa 211-8588 (JP)
(72) Inventor: YOKOI, Megumi, Kawasaki-shi Kanagawa 211-8588 (JP)
(74) Representative: Stebbing, Timothy Charles
(86) International application number: PCT/JP2007/062454
(87) International publication number: WO 2008/155847

(57) **Abstract**

It is possible to realize fetch of instructs constituting a loop by using a simple configuration without fixing a loop start point. Provided is a processing method performed by a processing device including: a instruction buffer; a instruction decoder; a pointer arranged to correspond to the instruction buffer and indicating a connection relationship between one instruction buffer from which a instruction stream is read out and other instruction buffer containing the next instruction stream to be read out, according to an identifier of other instruction buffer; a start point storage unit containing an identifier of the instruction buffer containing a instruction stream serving as a start point of repetition when performing a instruction fetch of such a predetermined instruction that processing of a instruction stream is repeated in a loop. When a instruction stream is read out from the instruction buffer and the predetermined instruction is detected from the instruction stream, the identifier stored in the start point storage unit is set as a pointer of the identifier of the next instruction buffer from which a instruction is to be read out.

## Description

### TECHNICAL FIELD

The present invention relates to a control technology, particularly, an instruction processing technology of an information processing device.

### BACKGROUND ART

An information processing device adopting a high-level instruction processing method after a pipeline processing method has hitherto implemented a scheme of improving the performance by speculatively executing a subsequent instruction without waiting for an end of execution of one instruction. As a matter of course, in advance of executing the instruction, the performance has been improved by speculatively supplying (fetching) the instruction. Herein, the term "speculative" connotes, for example, fetching the subsequent instruction from a fetch address according to a result of predetermined prediction before the fetch address of the subsequent instruction is determined, and thus processing the instruction.

In an instruction buffer system, the speculatively fetched instruction is temporarily retained (buffered) in an instruction buffer. Then, the instruction buffer supplies the instructions to an execution control unit which interprets and executes (which is generically expressed as "interpret") the instruction. The speculative fetch can proceed forward by providing a plurality of instruction buffers such as this.

Furthermore, a multiplicity of loops (short loops) exists in a program, in which the same instruction stream is reused a number of times. Namely, if the loop of the program is contained in the instruction stream buffered in the instruction buffer, a scheme of diverting the instruction streams already buffered in the buffer saves a larger number of fetching steps, obtains much higher efficiency and contributes to improve the performance to a greater degree than by continuing to newly acquire the instruction streams with respect to the loop-contained instruction streams.

For example, the following Patent documents disclose the proceeding technologies given by way of the instruction buffer reuse techniques.
[Patent document 1] Japanese Patent Publication No. 3804941
[Patent document 2] Japanese Patent Publication No. 3683968

### DISCLOSURE OF THE INVENTION

### PROBLEMS TO BE SOLVED BY THE INVENTION

Japanese Patent Publication No. 3804941 exemplifies an instance that a target for performing a comparative test is limited to a buffer number "0" of the instruction buffer serving as a starting point of the loop in order to simplify the circuit.

The "limitation of the starting point" implies that a content (instructions) in the buffer can not be reused as the loop unless the starting point of the loop is the buffer number "0", which means nothing but to miss a valuable chance for improving the performance.

Further, if a failure in the prediction is determined by, e.g., pre-decoding before executing the instruction and if only the instructions in and after a certain instruction buffer from within the instructions buffered currently in the instruction buffers , the starting point does not necessarily become the buffer number "0".

Therefore, on the occasion of detecting the branch instruction without fixing the starting point of the loop, a thinkable scheme is that all of the instruction buffers undergo the comparative test about whether a branch target address thereof is contained in the instruction buffer or not. If the comparative test targets are set to not only the instruction buffer having the buffer number "0" but also all of the instruction buffers, however, a cost for the circuits rises as the number of the instruction buffers increases, which simultaneously causes a problem such as a delay.

Such being the case, the present invention provides a technology enabling the fetch of the instructions forming the loop to be done with a simple configuration without fixing the starting point of the loop.

### MEANS FOR SOLVING THE PROBLEMS

A processing device according to the present invention includes: an instruction buffer buffered with an instruction stream; an instruction predicting unit predicting a predetermined instruction (e.g., a branch instruction); a pointer provided corresponding to the instruction buffer and pointing, when reading the instruction stream buffered in the one instruction buffer, a connecting relationship between the one instruction buffer and the another instruction buffer by use of identifying information of the another instruction buffer buffered with the instruction stream to be read next; a starting point storage unit stored with, in the case of performing an instruction fetch of such a predetermined instruction that a process of the instruction stream becomes a looped iteration, identifying information of the instruction buffer buffered with the instruction stream serving as a starting point of the iteration; and a pointer setting unit setting, when the instruction predicting unit detects the predetermined instruction, the identifying information stored in the starting point storage unit as the identifying information of the instruction buffer from which the instruction stream is read next in the pointer.

Further, other mean as a processing device according to the present invention includes: an instruction buffer buffered with an instruction stream; an instruction decoder decoding the instruction stream buffered in the instruction buffer, a pointer provided corresponding to the instruction buffer and pointing, when reading the instruction stream buffered in the one instruction buffer, a connecting relationship between the one instruction buffer and the another instruction buffer by use of identifying information of the another instruction buffer buffered with the instruction stream to be read next; a starting point storage unit stored with, in the case of performing an instruction fetch of such a predetermined instruction that a process of the instruction stream becomes a looped iteration, identifying information of the instruction buffer buffered with the instruction stream serving as a starting point of the iteration; and a pointer setting unit setting, when the instruction decoder detects the predetermined instruction, the identifying information stored in the starting point storage unit as the identifying information of the instruction buffer from which the instruction stream is read next in the pointer.

The pointer setting unit may compare an address for the instruction fetch conducted through the predetermined instruction with an instruction fetch address of the instruction buffer that is indicated by the starting point storage unit and, if the two addresses are coincident with each other, sets in the pointer the identifying information stored in the starting point storage unit as the identifying information of the instruction buffer from which the instruction stream is read next.

The processing device may include a starting point registering unit getting, if valid information does not exist in the starting point storage unit, the starting point storage unit stored with the identifying information of the instruction buffer buffered with the instruction stream that is instruction-fetched through the predetermined instruction.

The processing device may include a starting point registering unit getting, if the address for the instruction fetch conducted through the predetermined instruction is not coincident with the instruction fetch address of the instruction buffer that is indicated by the starting point storage unit, the starting point storage unit stored with the identifying information of the instruction buffer buffered with the instruction stream that is instruction-fetched through the predetermined instruction.

In the processing device, the predetermined instruction may be a branch instruction predicted by a branch predicting unit.

In the processing device, the predetermined instruction may be a branch instruction that has been actually executed.

If the predetermined instruction is an unconditional branch instruction or an instruction with the branch being predicted, a branch target address based on the instruction may be set as an address for the instruction fetch conducted through the predetermined instruction.

Further, a processing method by a processing device according to the present invention includes: an instruction buffer buffered with an instruction stream; an instruction predicting unit predicting a predetermined instruction; a pointer provided corresponding to the instruction buffer and pointing, when reading the instruction stream buffered in the one instruction buffer, a connecting relationship between the one instruction buffer and the another instruction buffer by use of identifying information of the another instruction buffer buffered with the instruction stream to be read next; a starting point storage unit stored with, in the case of performing an instruction fetch of such a predetermined instruction that a process of the instruction stream becomes a looped iteration, identifying information of the instruction buffer buffered with the instruction stream serving as a starting point of the iteration; and a pointer setting unit setting, when the instruction predicting unit detects the predetermined instruction, the identifying information stored in the starting point storage unit as the identifying information of the instruction buffer from which the instruction stream is read next in the pointer, the processing device executing: a step of reading the instruction stream buffered in the one instruction buffer; a step of detecting the predetermined instruction by the instruction predicting unit; and a step of setting, when the predetermined instruction is detected, the identifying information stored in the starting point storage unit as the identifying information of the instruction buffer from which the instruction stream is read next in the pointer.

Further, a processing method by a processing device according to the present invention includes: an instruction buffer buffered with an instruction stream; an instruction decoder decoding the instruction stream buffered in the instruction buffer, a pointer provided corresponding to the instruction buffer and pointing, when reading the instruction stream buffered in the one instruction buffer, a connecting relationship between the one instruction buffer and the another instruction buffer by use of identifying information of the another instruction buffer buffered with the instruction stream to be read next; a starting point storage unit stored with, in the case of performing an instruction fetch of such a predetermined instruction that a process of the instruction stream becomes a looped iteration, identifying information of the instruction buffer buffered with the instruction stream serving as a starting point of the iteration; and a pointer setting unit setting, when the instruction predicting unit detects the predetermined instruction, the identifying information stored in the starting point storage unit as the identifying information of the instruction buffer from which the instruction stream is read next in the pointer, the processing device executing: a step of reading the instruction stream buffered in the one instruction buffer; a step of detecting the predetermined instruction by the instruction decoder; and a step of setting, when the predetermined instruction is detected, the identifying information stored in the starting point storage unit as the identifying information of the instruction buffer from which the instruction stream is read next in the pointer.

In the processing method, wherein an address for the instruction fetch conducted through the predetermined instruction is compared with an instruction fetch address of said instruction buffer that is indicated by the starting point storage unit and, if the two addresses are coincident with each other, the identifying information stored in the starting point storage unit may be set in the pointer as the identifying information of said instruction buffer from which the instruction stream is read next.

In the processing method, wherein if the address for the instruction fetch conducted through the predetermined instruction is not coincident with the instruction fetch address of said instruction buffer that is indicated by the starting point storage unit, the starting point storage unit may be stored with the identifying information of said instruction buffer buffered with the instruction stream that is instruction-fetched through the predetermined instruction.

In the processing method, if the address for the instruction fetch conducted through the predetermined instruction is not coincident with the instruction fetch address of said instruction buffer that is indicated by said starting point storage unit, said starting point storage unit may be stored with the identifying information of said instruction buffer buffered with the instruction stream that is instruction-fetched through the predetermined instruction.

In the processing method, the predetermined instruction may be a branch instruction predicted by a branch predicting unit.

In the processing method, the predetermined instruction may be a branch instruction that has been actually executed.

In the processing method, if the predetermined instruction is an unconditional branch instruction or an instruction with the branch being predicted, a branch target address based on the instruction may be set as an address for the instruction fetch conducted through the predetermined instruction.

### EFFECTS OF THE INVENTION

According to the present invention, the fetch of the instructions forming a loop can be realized with a simple configuration without fixing a starting point of the loop.

### BRIEF DESCRIPTION OF THE DRAWINGS

FIG.1 is a diagram of an architecture of the present processing device.
FIG.2 is a diagram of a configuration of an instruction fetch control unit and a configuration of a circuit peripheral thereto.
FIG.3 is a diagram illustrating a structure of an instruction buffer.
FIG. 4 is a diagram illustrating details of an instruction fetch address selecting unit.
FIG.5 is a diagram illustrating a circuit which sets a pointer in a sequential direction.
FIG.6 is a diagram illustrating a circuit which sets a pointer in a branch target direction.
FIG.7 is an explanatory diagram of a pointer chain in the sequential direction.
FIG.8 is a diagram illustrating an example of supplying instructions by tracing the pointers.
FIG.9 is a diagram illustrating a configuration of a starting point register.
FIG.10 is a diagram illustrating a circuit which generates a valid flag START_IBR_ID_VALID of the starting point register.
FIG.11 is a diagram illustrating a circuit which sets a buffer number in a register START_IBR_ID which retains the buffer number of the starting point register.
FIG. 12 is a time chart of a process such as an instruction fetch request unit making registration in the starting point register.
FIG.13 is an explanatory diagram of a short loop formed by pointers.
FIG. 14 is an explanatory diagram of the short loop formed by the pointers.

### BEST MODE OF CARRYING OUT THE INVENTION

### «Substance of the Embodiment»

A processing device in an embodiment includes, separately from an instruction buffer, a starting point storage unit (register) registered with a buffer number (identifying information) of an instruction buffer that can possibly become a starting point of a short loop, and compares, in the case of detecting a branch instruction, a branch target address with an instruction fetch address belonging to the instruction buffer specified by the identifying information stored in the starting point register. If these addresses are coincident with each other, an instruction stream to be fetched next is the same as the instruction stream retained in the instruction buffer indicted by the starting point register.

Such being the case, a loop of the instruction buffers is formed by setting the instruction buffer number retained in the starting point register in a pointer which points the buffer number of the instruction buffer next to the instruction buffer buffered with data of the instruction fetch with a branch instruction being detected.

Thus, a simple configuration such as adding the starting point register stored with the buffer number of the instruction buffer becoming the starting point of the loop separately from the instruction buffer, enables the supply of the instructions forming the loop to be realized without fixing the starting point.

Further, it is sufficient to compare only the instruction fetch address of the instruction buffer indicated by the starting point register with the branch target address, and it is therefore feasible to realize the supply of the instructions forming the loop in almost the same period of time as by the prior art whatever degree the number of the instruction buffers increases to.

### «First Embodiment»

### <Architecture and Outline of System>

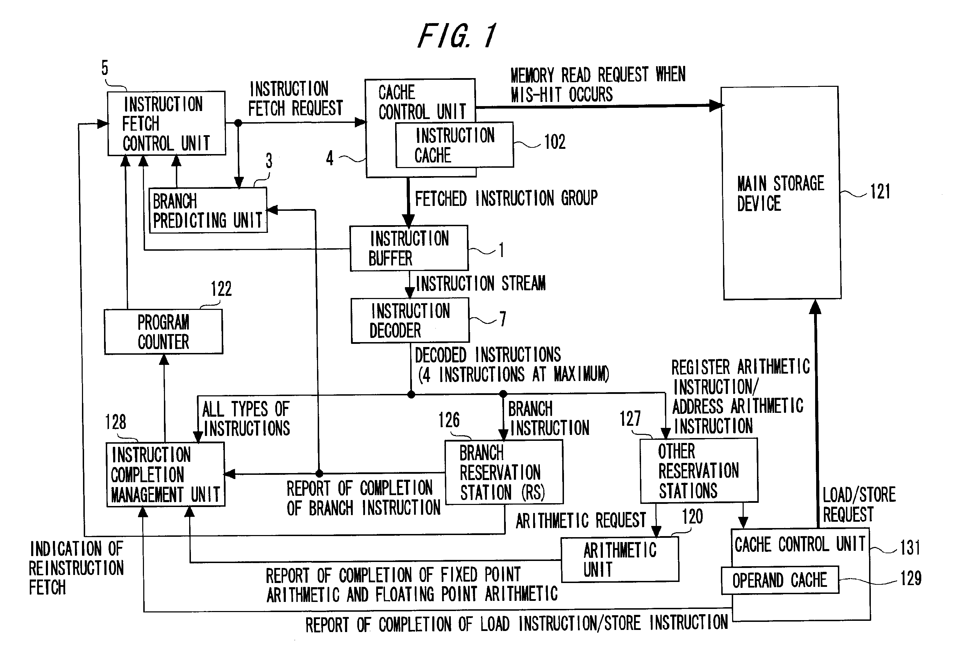

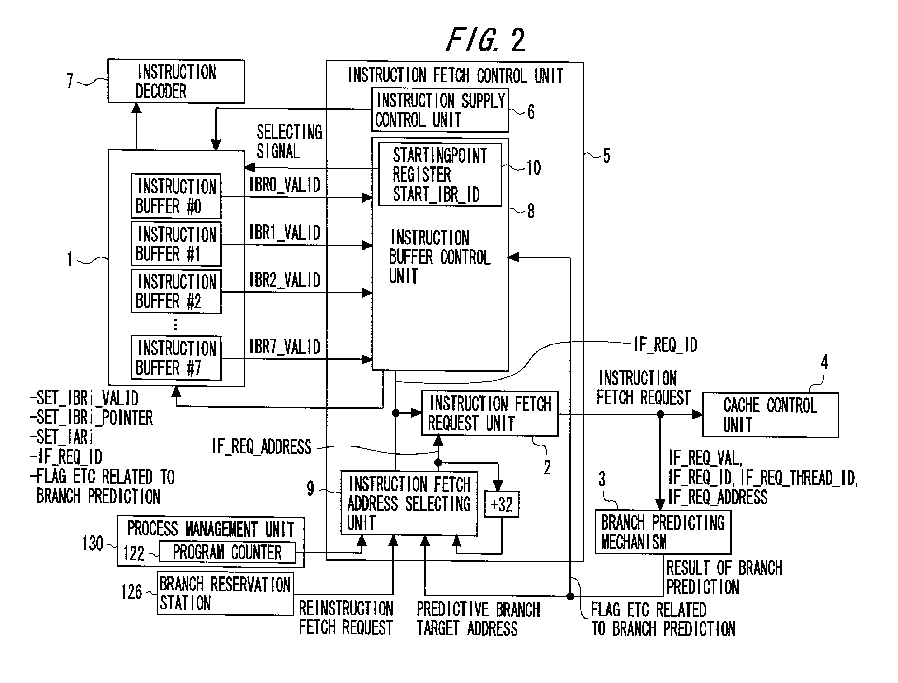

FIG. 1 illustrates a diagram of a configuration of the processing device. FIG. 2 depicts a diagram of the whole of control in the instruction fetch. The processing device is, e.g., a computer taking a so-called program built-in system, which reads and executes the instruction stored in a main storage device 121.

As illustrated in FIG. 1, the processing device includes an arithmetic unit 120 which executes the instructions, the main storage device 121 stored with the instructions executed by the arithmetic unit 120 and data etc processed by the arithmetic unit 120, and a program counter 122 which specifies an address, on the main storage device 121, of the instruction to be executed by the arithmetic unit 120.

In FIG. 1, more specifically, the processing device includes: an instruction fetch control unit 5 which controls the fetch of the instruction on the basis of an address generated by the program counter 122, a re-instruction fetch indication given from a branch reservation station 126 or a result of the prediction made by the branch prediction unit 3; an instruction cache control unit 4 which controls an instruction cache 102 and fetches the instruction in response to the instruction fetch request given from the instruction fetch control unit 5; an instruction buffer 1 which retains the instructions fetched from the instruction cache 102; an instruction decoder 107 which decodes the instructions in the instruction buffer 1; reservation stations (a branch reservation station 126 which controls the execution of the branch instruction and other reservation stations 127 which control execution of a register arithmetic instruction and an address arithmetic instruction) which control timing of executing the decoded instruction; an instruction completion management unit 128 which monitors completion of executing the instruction; an operand cache 129 which supplies fast the arithmetic unit 120 with an operand of the instruction that is executed by the arithmetic unit 120; and a data cache control unit 131 which controls transfer and reception of the data between the main storage device 121 and the operand cache 129.

### <Configuration of Instruction Fetch Control Unit>

FIG. 2 illustrates a detailed structure of the instruction fetch control unit 5 and a configuration of circuits related to the instruction fetch control unit 5.

The program counter 122 is stored with an address of the main storage device 121 from which the instruction is read next. Namely, when the instruction is actually executed, the address is updated with an address of the next instruction. The instruction fetch control unit 5 in this example, however, the instruction fetch control unit 5 in this example speculatively controls the instruction fetch in a way that basically reflects a result of the prediction of a branch predicting unit (corresponding to an instruction predicting unit) 3. Therefore, the case in which the instruction fetch control unit 5 uses the value of the program counter 122 is a case that an interrupt or a trap occurs in the processing device, and the operation starts by clearing all of the instruction buffers, or a case that the speculative fetch turns out a failure.

The branch reservation station 126 controls the execution of the branch instruction. Then, the branch reservation station 126 sends a report on whether to branch off by executing the branch instruction and a report of the completion when the branch target address is determined if branched to the instruction completion management unit 128. Moreover, the branch reservation station 126 decides whether the branch prediction is proper or not, and notifies the branch prediction unit 3 of a result thereof. Then, if failing to predict the branch, a cancel signal representing this purport is transmitted to the instruction fetch address selecting unit 9.

The instruction fetch address selecting unit 9 generates an instruction fetch request address (IF_REQ ADDRESS) for looking up in the instruction cache 4 stored with the instruction data on the basis of an address supplied from the program counter 122 when the interrupt or the trap etc occurs, a re-instruction fetch request signal and a re-instruction fetch request address that are output from the branch reservation station 126, a branch predicting target instruction fetch request signal and a branch predicting target instruction fetch request address that are output from the branch predicting unit 3 when failing to predict the branch, or an instruction address generated in a way that sequentially makes an addition of an instruction word length unit, e.g., 32 bytes in an addition unit.

The instruction fetch request unit 2 receives buffer identifying information (IF_REQ_ID) for specifying the instruction buffer 1 invalidated (i.e., set in an idle status) from the instruction buffer control unit 8. The instruction fetch request unit 2 is configured to issue the instruction fetch request as far as the invalidated instruction buffer 1 exists.

Then, the instruction fetch request unit 2 executes a process of outputting, together with the generated instruction fetch request address (IF_REQ_ADDRESS), an instruction fetch request signal (IF_REQ_VALID) and the buffer identifying information (IF_REQ_ID) for specifying the single invalidated instruction buffer 1, and so on.

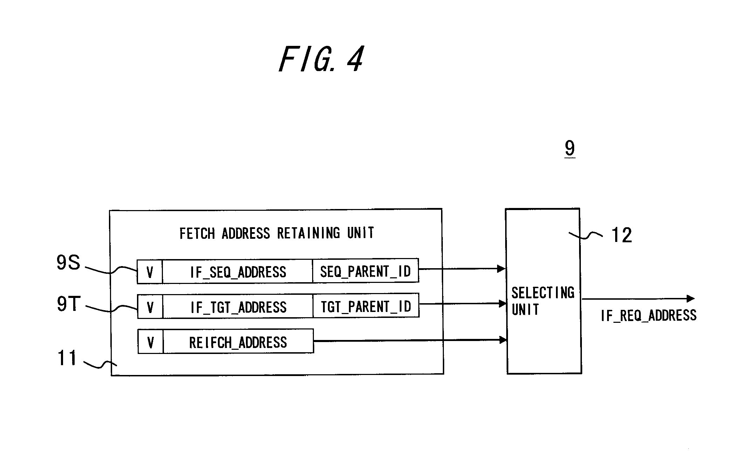

The instruction stream associated with the IF_REQ ADDRESS is thereby read from within the instruction data cached in the instruction cache 102. The readout instruction stream is buffered in the instruction buffer 1 associated with IF_REQ_ID. Note that the instruction fetch address selecting unit 9 may generate, though omitted in FIG. 4, an instruction fetch request into which IF_REQ_ID is combined with IF_REQ_ADDRESS.

The branch predicting unit 3 predicts whether or not the instruction stream associated with IF_REQ_ADDRESS contains the branch instruction for establishing the branch, then predicts, in the case of predicting that this branch instruction is contained, a branch target instruction address thereof, and outputs the branch predicting target instruction fetch request signal together with the thus-predicted branch target instruction address (the branch predicting target instruction address) to the instruction fetch address selecting unit 9. Further, in this case, the branch predicting unit 3 executes a process of outputting a piece of information representing that the instruction stream associated with IF_REQ_ADDRESS contains the instruction with the branch establishment being predicted and a piece of information specifying a position, on the instruction stream, of the predicted instruction to the instruction buffer control unit 8, and so forth.

The instruction buffer control unit 8 selects any one of the invalidated instruction buffers 1, and supplies the instruction fetch request unit 2 with the thread identifying information (IF_REQ_ID) for specifying the selected instruction buffer 1. Moreover, the instruction buffer control unit 8 joins the plurality of instruction buffers 1 to be decoded continuously by the pointers. To be specific, the instruction buffer control unit 8 stores, in a pointer unit 1B of the instruction buffer 1 buffered with the instruction stream associated with IF_REQ_ADDRESS, the information for specifying the instruction buffer 1 which retains the instruction stream to be supplied next to the instruction stream retained in the instruction buffer 1. In the first embodiment, when ensuring the subsequent instruction buffer 1 buffered with the subsequent instruction stream, the identification ID of the subsequent instruction buffer 1 is set in the pointer unit 1B of the preceding instruction buffer 1.

The instruction supply control unit 6 executes a process of setting a current ID (Current_ID, a first identifier) for specifying an identification ID of the instruction buffer 1 which retains the instruction stream supplied next to the instruction decoding unit 7, a next ID (Next_SEQ_ID) for specifying the identification ID of the instruction buffer which retains the instruction stream supplied next to the instruction stream retained in the instruction buffer 1 specified by the current ID, and an NSI counter value (NSI_Counter, an offset value) for specifying an offset position of the instruction stream retained by the instruction buffer 1 specified by the current ID, and so on. The NSI counter specifies which instruction stream in the plurality of instruction streams (e.g., eight instruction streams) included in each instruction buffer of the instruction buffers 1 the instructions are supplied from. The instruction buffer is selected based on the current ID, and the instructions are supplied from the instruction stream specified by the NSI counter, thus realizing the instruction supply to the instruction decoding unit 7.

### <Configuration of Instruction Buffer>

In the processing device, each instruction buffer 1 individually has an identification number i. An assumption in the first embodiment is that totally eight instruction buffers each having the identification number i = 0 - 7 are provided (FIG. 2).

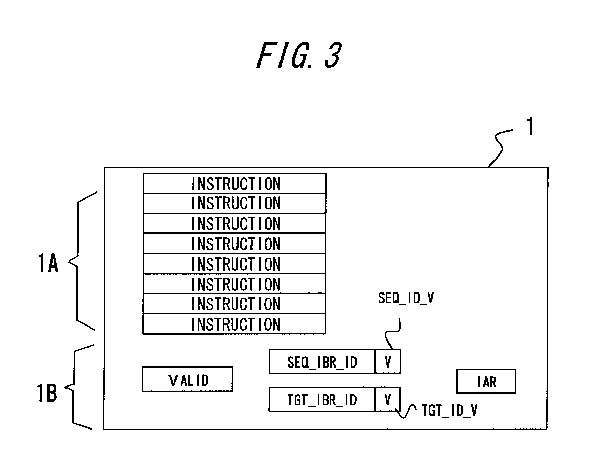

FIG. 3 illustrates a structure of the instruction buffer. Each instruction buffer 1 is constructed of a data unit 1A retaining the instruction words for every instruction fetch unit, and a pointer unit 1B for pointing the buffer number of the instruction buffer 1 that is used for the supply next to the instruction buffer concerned.

As illustrated in FIG. 3, the data unit 1A includes a register queue (register file) retaining the plurality of instructions. Further, the pointer unit 1B has registers in two lines such as IBRi_SEQ_IBR_ID representing the buffer number of the instruction buffer 1 subsequent in the sequential direction and its validity flag IBRi_SEQ_ID_V and, in the case of the branch, IBRi_TGT_IBR_ID representing the buffer number of the instruction buffer 1 retaining the branch target instruction stream and its validity flag IBRi_TGT_ID V.

Herein, in the case of expressing the register with IBRi_SEQ_IBR_ID etc, the head symbol "IBRi_" represents the register belonging to the i-th instruction buffer 1. In FIG. 3, the instruction buffer 1 is the generic term, and hence "IBRi" is omitted. Hereinafter, in the case of using this generic term "instruction buffer 1", the head symbol IBRi_" of each of the registers is omitted. Further, IBRi_SEQ_IBR ID etc represents the register and indicates a type of the signal stored in each register.

Moreover, the instruction buffer 1 includes a retaining unit (register) for a valid bit (IBRi_VALID) and a head address retaining unit (IAR) which retains the head address of the instruction stream to be used in the instruction streams retained in the instruction buffer. The valid bit is set to "1", thereby indicating the instruction buffer 1 being in use. If the data in the instruction buffer gets unnecessary, the valid bit is set "0". This process is called a release or invalidation of the instruction buffer.

### <Outline of Function of Instruction Fetch Address Selecting Unit>

FIG. 4 depicts details of the instruction fetch address selecting unit 9. The instruction fetch address selecting unit 9 includes an instruction fetch address retaining unit 11 which retains a plurality of addresses and a selecting unit 12 which selects IF_REQ_ADDRESS from the instruction fetch address retaining unit 11 according to a predetermined condition.

The instruction fetch address retaining unit 11 of the instruction fetch address selecting unit 9 has registers retaining a plurality of instruction fetch request addresses, these registers being given as follows. (1) A register for a sequential instruction fetch request: An address of the sequential instruction fetch request is an address which sequentially follows a certain instruction fetch request currently being output. This address is an address into which a total instruction length of the instruction stream acquired by the instruction fetch and retained within the instruction buffer is added to the address (IF_REQ_ADDRESS) of the instruction fetch request being output.

Specifically, if the instruction buffer is buffered with the eight instructions (32 bytes) each consisting of 4 bytes, a next instruction address is set such as IF_REQ ADDRESS + 32.
(2) A register for a branch target instruction fetch request: An address for the branch target instruction fetch request is generated in the case of including the branch predicting unit 3. The address for the branch target instruction fetch request is a predictive branch target address (IF_TGT_ADDRESS) when the branch instruction to branch off is predicted in the instruction stream obtained in response to a certain instruction fetch request that is currently output.
(3) A register for a re-instruction fetch request: An address for the re-instruction fetch request is a re-instruction fetch address (REIFCH_ADDRESS) when starting newly the instruction fetch if the instruction buffers for a certain thread are all invalidated for reasons such as a failure in the branch prediction and the error process. If the interrupt or the trap etc occurs, however, the program counter 122 supplies the re-instruction fetch request register with the address to be fetched next.

These addresses are stored in the respective registers. Each of these registers has the valid bit. The valid bit shows the validity of the address retained in the register as well as showing the validity of the request, simultaneously.

The selecting unit 12 selects one address from within the registers (1) through (3) according to the predetermined priority level.

### <Instruction Fetch Processing Procedure>

In the instruction fetch address retaining unit 11 in FIG. 4, IF_SEQ_ADDRESS and SEQ_PARENT_ID represent a sequential instruction fetch request register 9S. Moreover, IF_TGT ADDRESS and TGT_PARENT_ID represent a branch instruction fetch request register 9T.

REIFCH_ADDRESS represents a re-instruction fetch request register.

The address is selected from within these registers according to the predetermined priority levels. The predetermined priority levels involve considering, in the sequence from the highest priority level, 1. the re-instruction fetch address (a status in which all of the speculative executions are invalidated when issuing the request), 2. the predictive branch target address (a status in which the speculatively-issued sequential instruction fetch becomes unnecessary when issuing the request), 3. the sequential instruction fetch address, etc. The instruction fetch request unit 2 sends the instruction fetch request address thus selected by the instruction fetch selecting unit 9 to the cache control unit 4. IF_REQ_VALID represents a valid signal for sending the instruction fetch request. At this time, the instruction buffer control unit 8 selects, each time the instruction fetch is performed, one instruction buffer (IF_REQ_ID) for buffering the new instruction fetch data from within the instruction buffers which are not currently used (= VALID is not established).

Then, the instruction buffer control unit 8 sets the valid flag of the pointer unit 1B in the selected instruction buffer 1 when sending the instruction fetch request.

Further, a search for the branch instruction is performed in parallel by use of the instruction fetch request address. The branch predicting unit 3 can make the use of a branch history as in, e.g., Japanese Patent Laid-Open Publication No.H09-218786.

Moreover, the registers (the sequential instruction fetch request register 9S, and the branch target instruction fetch request register 9T in FIG. 4) for retaining the sequential instruction fetch request and for retaining the branch target instruction fetch request, include buffer number retaining units (SEQ_PARENT_ID, TGT_PARENT_ID) of the instruction buffers 1 buffered with the data of the instruction fetch which corresponds to a parent of the instruction fetch request retained in each of the registers. The "parent" is, namely, defined as the instruction fetch request (a storage content is the parent instruction buffer number: SEQ_PARENT_ID) based on the address serving as a basis for adding the total instruction length in the case of the sequential instruction fetch request register 9S. Further, in the case of the branch target instruction fetch request register 9T, the parent is defined as the instruction fetch request (a storage content is the parent instruction buffer number: TGT_PARENT_ID), in which the branch instruction to branch off is predicted (see FIG. 4).

Then, the link (established by setting the pointers) between the instruction buffer 1 and the next instruction buffer 1 is established on the occasion of the next instruction fetch. As illustrated in FIG. 4, each instruction fetch request has the parent instruction buffer number (SEQ_PARENT ID, TGT_PARENT_ID). Such being the case, the instruction buffer control unit (corresponding to a pointer setting unit) 8, when the instruction fetch request is issued, sets the instruction buffer number employed for the instruction fetch being currently in process.

If the instruction fetch request is the instruction fetch request in the sequential direction, the instruction buffer control unit 8 sets the instruction buffer number (IF REQ_ID at that time) being currently in process with respect to SEQ_IBR_ID of the parent instruction buffer (SEQ_PARENT ID). Moreover, if the instruction fetch request is related to the prediction branch target, the instruction buffer control unit 8 sets the instruction buffer number (IF_REQ ID at that time) being currently in process with respect to TGT_IBR_ID of the parent instruction buffer (TGT_PARENT_ID). Furthermore, the instruction buffer control unit 8 sets flags each indicating that the pointer is valid (SEQ_IBR_V, TGT IBR_V in FIG. 3).

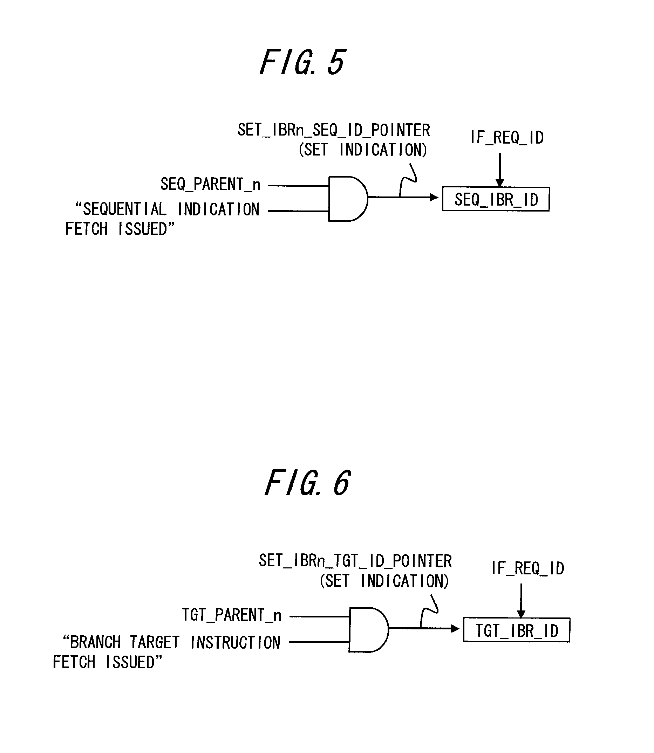

FIG. 5 illustrates an example of the circuit which sets the pointers in the sequential direction. For example, when SEQ_PARENT_n is switched ON and further when the request proves to be the sequential instruction fetch request, a setting signal (SET_IBRn_SEQ_ID_POINTER) is generated for SEQ_IBR_ID of the parent instruction buffer (SEQ_PARENT_ID THn). Then, with this setting signal, IF_REQ_ID for identifying the instruction buffer 1 being currently in process is set in SEQ_IBR_ID.

FIG. 6 illustrates an example of the circuit which sets the pointer in the branch target direction. When the branch target instruction fetch request occurs, the pointer is set. For example, when TGT_PARENT_n is switched ON and further when the request proves to be the instruction fetch request in the branch target direction, a setting signal (SET IBRn_TGT_ID_POINTER) is generated for SEQ_IBR_ID of the parent instruction buffer (TGT_PARENT_ID_THn). Then, with this setting signal, IF_REQ_ID for identifying the instruction buffer 1 being currently in process is set in TGT_IBR_ID.

With a continuation of this procedure, the pointer chain of the instruction buffer 1 is formed.

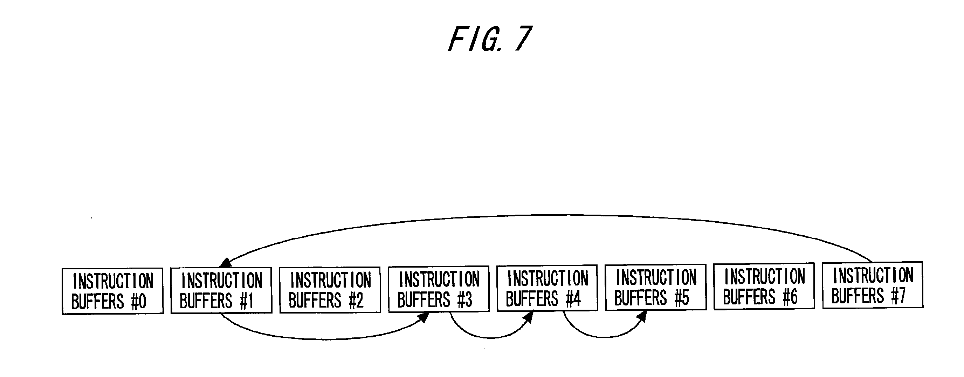

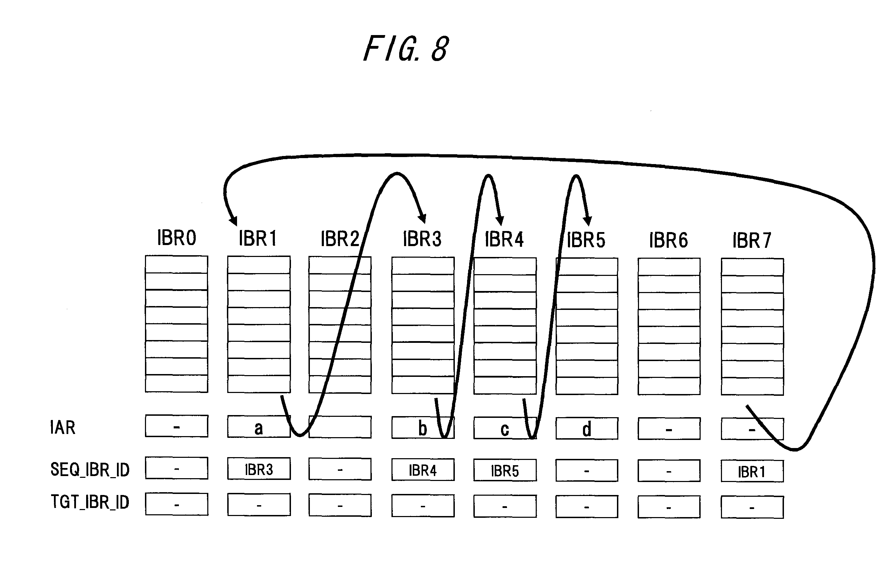

For instance, as depicted in FIG. 7, the pointer chain in the sequential direction is formed such as the instruction buffers 7→1→3→4→5, in which case the instructions are supplied in a way that traces SEQ_IBR_ID as illustrated in FIG. 8.

To begin with, in the case of supplying the instruction stream of the instruction buffer #7, i.e., IBR7, a value of IBR0_SEQ_IBR_ID of IBR0 is "IBR1", and hence the instruction stream of IBR1 is supplied next.

A value of IBR1_SEQ_IBR_ID of IBR1 is "IBR3", and therefore the instruction stream of IBR3 is supplied next; similarly a value of IBR3_SEQ_IBR_ID of IBR3 is "IBR4", and hence the instruction stream of IBR4 is supplied next; and a value of IBR4_SEQ_IBR_ID of IBR4 is "IBR5", and hence the instruction stream of IBR5 is supplied.

### <Process of Short Loop>

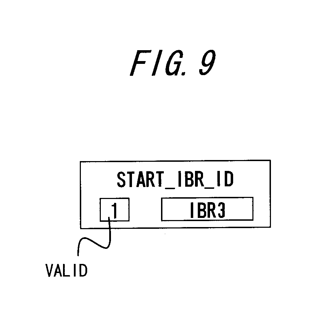

FIG. 9 is a diagram of a configuration of the starting point register 10. The starting point register 10 has a register for retaining a buffer number START_IBR_ID of the starting point and a register for retaining a valid flag START IBR_ID_VALID.

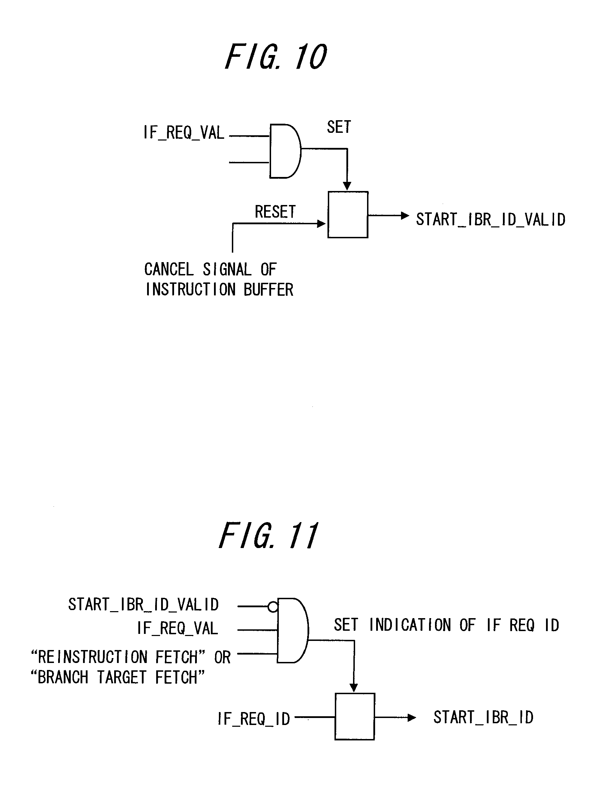

FIG. 10 illustrates a circuit which generates the valid flag START_IBR_ID_VALID of the starting point register in the instruction buffer control unit 8. This circuit is switched ON when the instruction fetch request is valid (IF REQ_VALID is ON) and when the re-instruction fetch or the branch target fetch is carried out. While on the other hand, the circuit is switched OFF when the cancel signal with respect to the instruction buffer 1 is transmitted.

FIG. 11 illustrates a circuit which sets the buffer number in the register START_IBR_ID for retaining the buffer number of the starting point register 10 in the instruction buffer control unit (corresponding to a starting point registering unit) 8. This circuit sets IF_REQ_ID defined as the identification ID of the instruction buffer 1 in START IBR_ID of the starting point register 10 when the valid flag of the starting point register 10 is invalid (START_IBR_ID VALID is OFF, i.e., the valid starting point is not yet set), when the instruction fetch request is valid (IF_REQ_VALID is ON) and when the re-instruction fetch or the branch target fetch is performed. Namely, when performing the re-instruction fetch and the branch target fetch, the instruction stream fetched at this time has a high possibility of becoming the starting point of the loop, so that the instruction buffer control unit 8 registers the buffer number of the buffer buffered with this instruction stream in the starting point register 10.

Such a case is presumed that the instruction fetch request sent from the instruction fetch request unit 2 is the branch target instruction fetch request based on the branch prediction made by a branch history unit of the branch predicting unit 3 or is the branch target re-instruction fetch request for redoing the instruction fetch because of knowing that the branch prediction has got into the failure when executing the instruction. In this case, the starting point register (START_IBR_ID) is registered with the buffer number (i.e., IF_REQ_ID) of the instruction buffer ensured by the branch target instruction fetch request or the re-instruction fetch request, and VALID of the register is set ON.

Then, it is assumed that the branch instruction exists in the instruction stream retained in a certain instruction buffer. The branch instruction may be detected by the instruction decoder 7. Then, if the branch target address of the branch instruction is coincident with the instruction fetch address (i.e. , the head address IAR of the instruction stream retained in the instruction buffer) of the instruction buffer indicated by the starting point register 10, the value retained in the starting point register 10 is set in TGT_IBR_ID of the instruction buffer with the branch instruction being detected, thereby forming the loop of the instruction buffers.

Further, the branch instruction can be also detected based on the branch prediction. The branch predicting unit 3 has the branch history unit. Herein, a brief description of the branch history unit will be made. The branch history unit predicts existence of the branch instruction and the branch target address thereof. For example, the implementation thereof is exemplified as below. On such an occasion that the processing device executes the process, the branch proves to be established as a result of executing the branch instruction, in which case the branch instruction will, it is considered, also branch off next, and a pair of an address of the branch instruction itself (which will hereinafter be referred to as the branch instruction address) and an address of the branch target instruction (which will hereinafter be referred to as the branch target address) is registered in the branch history unit. Thus, the paired data about the branch instruction with the branch being established is accumulated in the branch history unit. Namely, the branch history unit is registered with only the data of the branch instruction predicted to branch off. Then, on the occasion of fetching a certain branch instruction from the main storage device and executing this branch instruction, a search through an index of the branch history unit is made in advance of the execution thereof , and, if the branch instruction address is registered in the branch history unit, the branch target address paired with the branch instruction address is read from the branch history unit. Then, without waiting for an end of the anterior execution of the instruction, the instruction associated with the branch target address is fetched out of the main storage device. Note that if the cache memory retains a copy of the instruction associated with the branch target address, this instruction is fetched from the cache memory and executed. Further, the branch history unit can also improve accuracy of the branch prediction by predicting whether to branch off or not when the branch instruction occurs next on the basis of the branch result (= branch history) of a plurality of occurrences of a certain branch instruction. If predicted to branch off, this is likewise registered in the branch history unit.

Namely, before executing the branch instruction, if the branch history unit predicts the establishment of the branch (if the branch target address associated with the branch instruction address is registered in the branch history unit), the instruction fetch (which has the same meaning as the read of the instruction; the read will be explained hereinafter as the fetch as the case may be) is speculatively carried out by use of the predicted branch target address, and, subsequent to the branch instruction, the readout branch target instruction is inputted to the instruction execution stage.

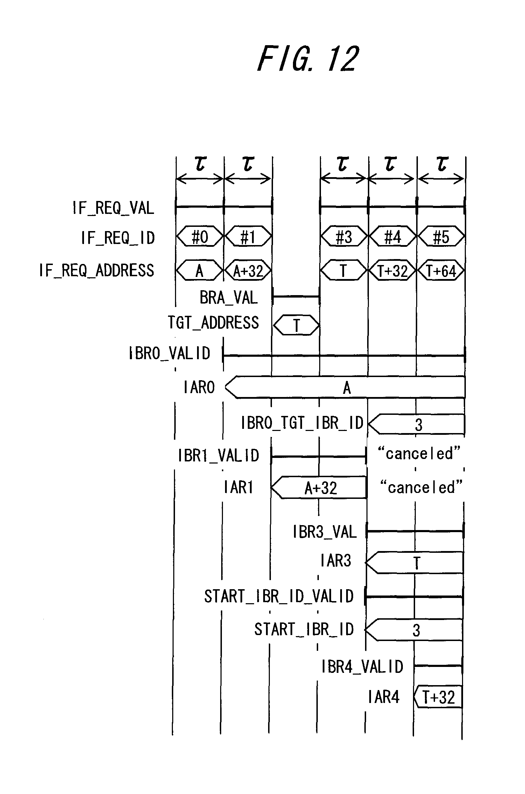

FIG. 12 is a time chart of the process such as the instruction buffer control unit 8 making the registration in the starting point register.

An assumption is that a certain instruction fetch request is sent, in which IF_REQ_ADDRESS = "A" and IF_REQ ID = "#0". When the buffer number of the instruction buffer 1 is "#0", this instruction buffer 1 is denoted by IBR0.

At a next machine cycle τ, the instruction fetch request has been, it follows, sent while ensuring the instruction buffer 1 (IBRO) having the buffer number "#0", and therefore IBR0_VALID defined as the valid flag of IBR0 is set ON. Moreover, the instruction fetch address A of IBR0 is stored in a register IAR0. Further, the instruction fetch request is sent with the address which advances basically on the instruction word length unit, i.e., as given by IF REQ_ADDRESS = "A+32". If the buffer number of the ensured at this time is #1, a relationship is established such as IF_REQ_ID = #1.

On the other hand, when searching through the branch history unit of the branch predicting unit 3 with the instruction fetch address A and if the branch instruction to branch off is detected, the signal BRA_VAL representing this detection and the branch target address TGT_ADDRESS = "T" (for simplifying the story, let "T" be a 32-byte border address) are issued after the predetermined cycle τ, i.e., after 2τ since the branch instruction has been given.

The instruction fetch request unit 2 compares this branch target address T with the instruction fetch address IARx of the instruction buffer 1 specified by START_IBR_ID of the starting point register 10. Herein, if the branch address is coincident with the instruction fetch address (IARx= TGT_ADDRESS) and if START_IBR_ID_NALID is ON, the branch target instruction stream has already existed in the instruction buffer 1, and, whereas if not coincident or if START_IBR_ID_NALID is OFF, the branch target instruction stream does not exist in the instruction buffer 1.

Accordingly, in the latter case, the branch target instruction stream is newly fetched, and further, if START IBR_ID is OFF, this instruction buffer 1 is registered in the starting point register 10. An example in FIG. 12 is that a condition "Coincident and VALID-ON" is not established, the instruction buffer 1 specified by the buffer number #3 is ensured, and the instruction fetch request unit 2 sends the instruction fetch request with IF_REQ_ADDRESS = "T", IF REQ_ID = "#3".

Then, at the next cycle τ, the instruction fetch request is sent with IF_REQ_ADDRESS = "T+32" and IF_REQ_ID = "#4". Moreover, the instruction fetch request unit 2 registers "#3" in the pointer unit (IBRO_POINTER) 1B of IBR0 and, at the same time, registers "#3" as the starting point (START_IBR_ID) of the loop in the starting point register 10. Hereat, START_IBR_ID is also validated (ON).

Further, the instruction fetch request unit 2 sets IBR3_VALID of the branch target and registers "T" in IAR3, while invalidating (canceling) the instruction fetch request IBR1_VALID in the sequential direction and IAR1 as well.

Moreover, at the next cycle τ, the instruction fetch request is sent with IF_REQ_ADDRESS = "T+64" and IF_REQ_ID = "#5".

It is assumed that when searching through the branch history unit of the branch predicting unit 3 with this instruction fetch address T+64, the branch instruction to branch off is detected, and the signal BRA_VAL representing this detection and the branch target address TGT_ADDRESS = "T" are issued.

The instruction fetch request unit 2 compares this branch target address T with the instruction fetch address IARx of the instruction buffer 1 specified by START_IBR_ID of the starting point register 10. At this point of time, START_IBR_ID_VALID registered in the starting point register 10 is "#3" as described above, and the instruction fetch address IAR3 of the instruction buffer 1 is "T", which is coincident with the branch target address T (IAR3 =TGT_ADDRESS = T).

Accordingly, since the subsequent instruction stream has already existed in the instruction buffer 1, the instruction fetch request unit 2 updates the TGT_IBR_ID of the pointer unit 1B in IBR5 with the branch instruction being detected on the basis of START_IBR_ID of the starting point register 10, and validates TGT_IBR_ID but invalidates SEQ ID_V.

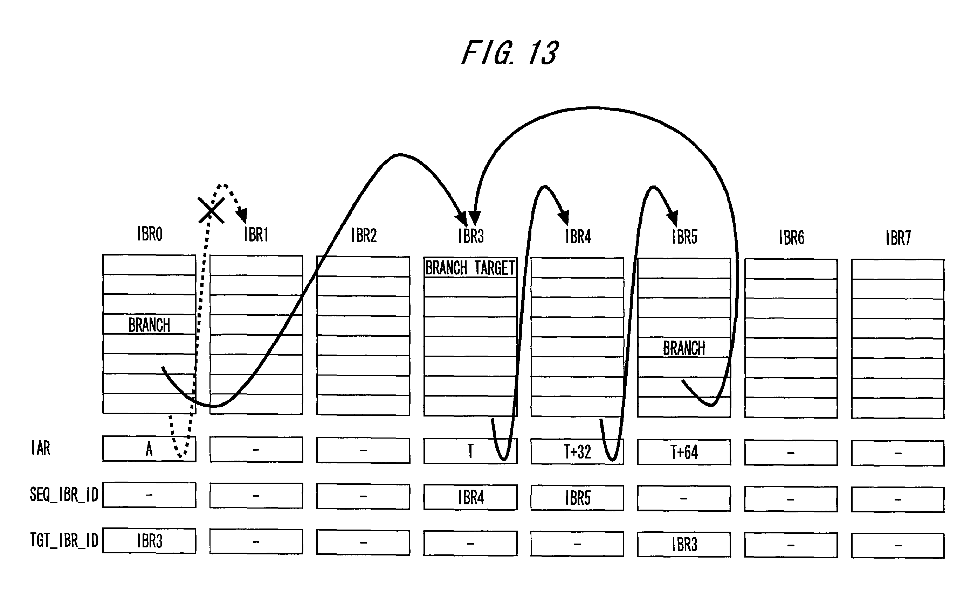

Then, in the case of supplying the instruction stream of the instruction buffer #5, i.e., IBR5, the value of the valid pointer IBR5_TGT_IBR_ID of IBR5 is "IBR3", and hence the instruction stream of IBR3 is next supplied. Note that in FIG. 13, the value of the register TGT_IBR_ID or SEQ IBR_ID with TGT_ID_V or SEQ_ID_V being valid is given, and the value of the invalid register is expressed by "-".

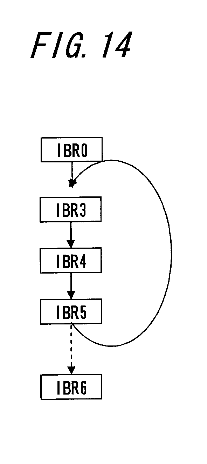

The value of IBR3_SEQ_IBR_ID of IBR3 is "IBR4", and therefore the instruction stream of IBR4 is next supplied; similarly the value of IBR4_SEQ_IBR_ID of IBR4 is "IBR5", and therefore the instruction stream of IBR5 is supplied; and the value of IBR5_SEQ_IBR_ID of IBR5 is "IBR3", and hence the instruction stream of IBR3 is supplied, thus forming the short loop such as the instruction buffers #0→#3→#4→#5→#3→#4→#5→#3... as depicted in FIG. 14.

Thus, the simple configuration that the starting point register 10 retains the starting point information START_IBR_ID enables the short loop of the instruction buffers to be set without restricting the instruction buffer serving as the starting point.

With this scheme, it is feasible to realize the supply the instructions forming the loop in almost the same period of time as by the prior art without depending on the number of the instruction buffers.

## Claims

1. A processing device comprising:
an instruction buffer buffered with an instruction stream;
an instruction predicting unit predicting a predetermined instruction;
a pointer provided corresponding to said instruction buffer and pointing, when reading the instruction stream buffered in said one instruction buffer, a connecting relationship between said one instruction buffer and said another instruction buffer by use of identifying information of said another instruction buffer buffered with the instruction stream to be read next;
a starting point storage unit stored with, in the case of performing an instruction fetch of such a predetermined instruction that a process of the instruction stream becomes a looped iteration, identifying information of said instruction buffer buffered with the instruction stream serving as a starting point of the iteration; and
a pointer setting unit setting, when said instruction predicting unit detects the predetermined instruction, the identifying information stored in the starting point storage unit as the identifying information of said instruction buffer from which the instruction stream is read next in the pointer.

2. The processing device according to claim 1, further comprising a starting point registering unit getting, if valid information does not exist in the starting point storage unit, the starting point storage unit stored with the identifying information of said instruction buffer buffered with the instruction stream that is instruction-fetched through the predetermined instruction.

3. The processing device according to claim 1 or 2, wherein the predetermined instruction is a branch instruction predicted by the instruction predicting unit.

4. The processing device according to any one of claims 1 through 3, wherein the predetermined instruction is a branch instruction that has been actually executed.

5. The processing device according to any one of claims 1 through 4, further comprising an instruction decoder decoding the instruction stream buffered in said instruction buffer,
wherein when the instruction decoder detects the predetermined instruction, the identifying information stored in the starting point storage unit is set, in the pointer, as the identifying information of said instruction buffer from which the instruction stream is read next.

6. The processing device according to any one of claims 1 through 5, wherein the pointer setting unit compares an address for the instruction fetch conducted through the predetermined instruction with an instruction fetch address of said instruction buffer that is indicated by the starting point storage unit and, if the two addresses are coincident with each other, sets in the pointer the identifying information stored in the starting point storage unit as the identifying information of said instruction buffer from which the instruction stream is read next.

7. The processing device according to any one of claims 1 through 4, further comprising a starting point registering unit getting, if the address for the instruction fetch conducted through the predetermined instruction is not coincident with the instruction fetch address of said instruction buffer that is indicated by the starting point storage unit, the starting point storage unit stored with the identifying information of said instruction buffer buffered with the instruction stream that is instruction-fetched through the predetermined instruction.

8. The processing device according to any one of claims 1 through 7, wherein if the predetermined instruction is an unconditional branch instruction or an instruction with the branch being predicted, a branch target address based on the instruction is set as an address for the instruction fetch conducted through the predetermined instruction.

9. A processing method by a processing device comprising:
an instruction buffer buffered with an instruction stream;
an instruction predicting unit predicting a predetermined instruction;
a pointer provided corresponding to said instruction buffer and pointing, when reading the instruction stream buffered in said one instruction buffer, a connecting relationship between said one instruction buffer and said another instruction buffer by use of identifying information of said another instruction buffer buffered with the instruction stream to be read next;
a starting point storage unit stored with, in the case of performing an instruction fetch of such a predetermined instruction that a process of the instruction stream becomes a looped iteration, identifying information of said instruction buffer buffered with the instruction stream serving as a starting point of the iteration; and
a pointer setting unit setting, when the instruction predicting unit detects the predetermined instruction, the identifying information stored in the starting point storage unit as the identifying information of said instruction buffer from which the instruction stream is read next in the pointer, the processing device executing:
a step of reading the instruction stream buffered in said one instruction buffer;
a step of detecting the predetermined instruction by the instruction predicting unit; and
a step of setting, when the predetermined instruction is detected, the identifying information stored in the starting point storage unit as the identifying information of said instruction buffer from which the instruction stream is read next in the pointer.

10. The processing method according to claim 9, wherein if valid information does not exist in the starting point storage unit, the starting point storage unit is stored with the identifying information of said instruction buffer buffered with the instruction stream that is instruction-fetched through the predetermined instruction.

11. The processing method according to claim 9 or 10, wherein the predetermined instruction is a branch instruction predicted by the instruction predicting unit.

12. The processing method according to any one of claims 9 through 11, wherein the predetermined instruction is a branch instruction that has been actually executed.

13. The processing method according to any one of claims 9 through 12, wherein the processing device further comprises an instruction decoder decoding the instruction stream buffered in said instruction buffer, and
when the instruction decoder detects the predetermined instruction, the identifying information stored in the starting point storage unit is set, in the pointer, as the identifying information of said instruction buffer from which the instruction stream is read next.

14. The processing method according to any one of claims 9 through 13, wherein an address for the instruction fetch conducted through the predetermined instruction is compared with an instruction fetch address of said instruction buffer that is indicated by the starting point storage unit and, if the two addresses are coincident with each other, the identifying information stored in the starting point storage unit is set in the pointer as the identifying information of said instruction buffer from which the instruction stream is read next.

15. The processing method according to any one of claims 9 through 14, wherein if the address for the instruction fetch conducted through the predetermined instruction is not coincident with the instruction fetch address of said instruction buffer that is indicated by the starting point storage unit, the starting point storage unit is stored with the identifying information of said instruction buffer buffered with the instruction stream that is instruction-fetched through the predetermined instruction.

16. The processing method according to any one of claims 9 through 15, wherein if the predetermined instruction is an unconditional branch instruction or an instruction with the branch being predicted, a branch target address based on the instruction is set as an address for the instruction fetch conducted through the predetermined instruction.
